# EUROPÄISCHE PATENTSCHRIFT

(11) **EP 2 188 149 B1**
(45) Veröffentlichungstag und Bekanntmachung des Hinweises auf die Patenterteilung: **14.10.2015**
(21) Anmeldenummer: 08785725.6
(22) Anmeldetag: 27.08.2008
(51) Int. Cl.: B60N 2/48

(54) **KOPFSTÜTZE FÜR EIN FAHRZEUG**
HEAD RESTRAINT FOR A VEHICLE
APPUIE-TÊTE POUR UN VÉHICULE

(30) Priorität: 31.08.2007 DE 102007041521
(43) Veröffentlichungstag der Anmeldung: 26.05.2010
(73) Patentinhaber: Johnson Controls GmbH, 51399 Burscheid (DE)
(72) Erfinder: WERNER, Hans-Georg, 40764 Langenfeld (DE)
(74) Vertreter: Schwöbel, Thilo K.
(86) Internationale Anmeldenummer: PCT/EP2008/007026
(87) Internationale Veröffentlichungsnummer: WO 2009/030414

(56) Entgegenhaltungen:
- EP-A- 0 974 484
- DE-A1- 3 900 495
- DE-B3-102004 016 474
- DE-B3-102006 001 143
- DE-C1- 19 941 712
- US-A- 2 973 029
- US-A1- 2005 077 762

## Beschreibung

Die Erfindung betrifft eine Kopfstütze für einen Fahrzeugsitz, bei welcher zumindest ein dem Kopf des Sitzinsassen zugewandtes Teilstück der Kopfstütze unfallbedingt unter der Wirkung einer Antriebseinrichtung aus einer Gebrauchsstellung zum Kopf des Sitzinsassen hin in eine Sicherheitsstellung verlagerbar ist.

### Stand der Technik

Aus der Druckschrift DE 199 23 909 A1 ist eine Kopfstütze bekannt, die aus einem mit der Rückenlehne des Fahrzeugsitzes über Haltestangen starr, gegebenenfalls auch höhenverstellbar verbundenen Grundkörper besteht, der in einem wannenartig ausgebildeten Polstersegment angeordnet ist. Bei einem Unfall wird das Polstersegment translatorisch zum Kopf des Sitzinsassen hin bewegt, um einem Schleudertrauma vorzubeugen. Die hierzu erforderliche Kraft wird durch eine in Verschieberichtung vorgespannte Feder innerhalb einer teleskopartigen Führungseinrichtung erzeugt. In der Offenlegungsschrift DE 39 00 495 A1 wird eine weitere Kopfstütze beschrieben, bei welcher ein Polstersegment unfallbedingt gegenüber dem Grundkörper um eine feste Drehachse nach vorne schwenkbar ist. Als Antriebseinrichtung dient eine federbelastete Kolben/Zylinderanordnung in Verbindung mit einem Stützhebel, bei welcher der die Kolbenstange im Bereich der Drehachse am Grundkörper und der Zylinder am Polstersegment angelenkt ist. Aus der Druckschrift DE 199 41 712 C1 ist ferner eine Kopfstütze bekannt, bei welcher ein verlagerbares Polsterelement mit dem Grundkörper über einen Scherenmechanismus verbunden ist, mittels dessen das Polsterelement aus einer Ruhestellung nach vorne in eine Gebrauchsstellung bewegbar ist. Eine gattungsgemäße Kopfstütze ist aus der Druckschrift DE 10 2004 016 474 B3 bekannt. Hierbei werden Teilstücke der Kopfstütze teleskopartig auseinanderbewegt, um eine Sicherheitsstellung der Kopfstütze einzunehmen.

Der Erfindung liegt die Aufgabe zugrunde, eine Kopfstütze mit einer einfach sowie kompakt aufgebauten und wirkungsvollen Antriebseinrichtung bereitzustellen.

Die Aufgabe wird gelöst durch eine Kopfstütze für einen Fahrzeugsitz, bei welcher zumindest ein dem Kopf des Sitzinsassen zugewandtes erstes Teilstück der Kopfstütze unfallbedingt unter der Wirkung einer Relativbewegung eines im Wesentlichen zwischen dem ersten Teilstück und einem dritten Teilstück angeordneten zweiten Teilstücks der Kopfstütze aus einer Gebrauchsstellung zum Kopf des Sitzinsassen hin entlang einer Verlagerungsrichtung in eine Sicherheitsstellung verlagerbar ist, wobei die Relativbewegung der Teilstücke eine Drehung um eine zur Verlagerungsrichtung im Wesentlichen parallele Drehachse ist, wobei eine Blockiereinrichtung zur Blockierung oder Verringerung einer Bewegung des ersten Teilstücks der Kopfstütze entgegen der Verlagerungsrichtung vorgesehen ist und wobei die Blockiereinrichtung eine Verzahnung wenigstens eines Teils der Teilstücke und eine Distanzeinrichtung aufweist. Erfindungsgemäß ist es besonders bevorzugt, dass das zweite Teilstück relativ zum dritten Teilstück im Bereich um die Drehachse mittels am dritten Teilstück angeordneter Lagerrippen gelagert vorgesehen ist. Sowohl durch die Maßnahme einer Distanzeinrichtung als auch durch die Maßnahme einer Lagerung des zweiten Teilstücks mittels Lagerrippen ist es erfindungsgemäß möglich, die Reibung bei der Bewegung der Teilstücke zueinander wesentlich zu verringern. Hierdurch ist eine leichtgängigere Betätigung der Sicherheitseinrichtung innerhalb der Kopfstütze möglich, was zu Vorteilen mit Blick auf die vorzusehenden Betätigungseinrichtungen bzw. Aktuatoren sowohl hinsichtlich ihres Gewichts als auch hinsichtlich ihres Bauraums bzw. ihrer Kosten führt. Beide Maßnahmen können erfindungsgemäß selbstverständlich auch kombiniert miteinander vorgesehen sein.

Erfindungsgemäß ist es besonders bevorzugt, dass die Distanzeinrichtung wenigstens eine Federeinrichtung aufweist, wobei die Federeinrichtung einen Eingriff der Verzahnung verhindert, wenn das erste Teilstück keine wesentliche Blockierbelastung erfährt. Hierdurch ist mit einfachen Mitteln eine große Verminderung der Reibung bei der Betätigung der Kopfstütze möglich.

Erfindungsgemäß ist es ferner bevorzugt, wenn die Federeinrichtung mittels am zweiten Teilstück und/oder am dritten Teilstück umspritzter Metallfederelemente realisiert ist bzw. wenn die Federeinrichtung mittels am zweiten Teilstück und/oder am dritten Teilstück einstückig mit dem Material des zweiten und/oder dritten Teilstücks vorgesehener Federelemente realisiert ist bzw. wenn die Federeinrichtung mittels eines im Ganzen parallel zur Verlagerungsrichtung verschiebbaren sowie federvorbelasteten Abstandselement realisiert ist. Hierdurch ist es erfindungsgemäß in einfacher Weise möglich, effizient zu einer Reibungsverminderung beizutragen ohne andererseits hohe Mehrkosten für die Bereitstellung der hierfür notwendigen Bauteile bzw. Strukturen in Kauf nehmen zu müssen. Dies trifft insbesondere für die am zweiten Teilstück und/oder am dritten Teilstück einstückig mit dem Material des zweiten und/oder dritten Teilstücks vorgesehenen Federelemente zu.

Gemäß einer weiteren bevorzugten Ausführungsform ist zwischen dem zweiten und dritten Teilstück und/oder zwischen dem ersten und zweiten Teilstück eine Schenkelfeder vorgesehen, die bevorzugt entweder zur unfallbedingten Verlagerung des ersten Teilstücks in die Sicherheitsstellung vorgespannt ist oder aber zur Einstellung der Gebrauchsstellung hin vorgespannt ist.

Die Figuren stellen beispielhaft und schematisch verschiedene Ausführungen der Erfindung dar.

Es zeigen:
- Figur 1: einen Fahrzeugsitz mit einer Kopfstütze,
- Figuren 2a bis 2d: Schnitte durch eine in die Kopfstütze einsetzbare Antriebseinrichtung in unterschiedlichen Funktionsstellungen,
- Figuren 3 bis 12: verschiedene Ausführungsformen bzw. Details der erfindungsgemäßen Kopfstütze.

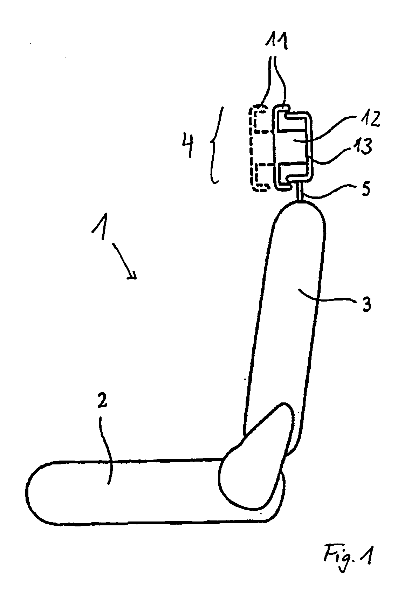

Gemäß der Figur 1 umfasst ein erfindungsgemäßer Fahrzeugsitz 1 bzw. ein mit einer erfindungsgemäßen Kopfstütze 4 ausgestatteter Fahrzeugsitz 1 ein Sitzteil 2 und eine mit diesem insbesondere neigungsverstellbar verbundene Rückenlehne 3, welche mit der Kopfstütze 4 ausgestattet ist. Paarige Haltestangen 5 können zur Befestigung der Kopfstütze an der Rückenlehne 3 vorgesehen sein. Es können jedoch auch alternativ andere Befestigungsmöglichkeiten (nicht dargestellt) zwischen der Rückenlehne 3 und der Kopfstütze 4 vorgesehen sein. Die paarigen Haltestangen 5 der Kopfstütze 4 können im oberen Bereich der Rückenlehne 3 oder im Bereich der Kopfstütze 4 über ein Gelenk (nicht dargestellt) mit der Rückenlehne 3 bzw. mit der Kopfstütze 4 schwenkbar verbunden sein. Die Kopfstütze 4 weist erfindungsgemäß wenigstens ein dem Kopf des Sitzinsassen zugewandtes erstes Teilstück 11 der Kopfstütze 4 auf, das unfallbedingt unter der Wirkung einer Relativbewegung eines im Wesentlichen zwischen dem ersten Teilstück 11 und einem dritten Teilstück 13 angeordneten zweiten Teilstücks 12 der Kopfstütze 4 aus einer Gebrauchsstellung (mit durchgezogener Linie in Figur 1 gezeichnet) zum Kopf des Sitzinsassen hin entlang einer Verlagerungsrichtung in eine Sicherheitsstellung (mit gestrichelter Linie in Figur 1 gezeichnet) verlagerbar ist. Bei dem ersten Teilstück 11 handelt es sich insbesondere um ein Polsterelement, an welches der Kopf des Sitzinsassen angelegt bzw. abgestützt werden kann. Bei dem dritten Teilstück der Kopfstütze handelt es sich insbesondere um einen Grundkörper der Kopfstütze über die Haltestangen 5 starr oder auch höhen und/oder neigungsverstellbar mit der Rückenlehne 3 verbunden ist. Innerhalb der Kopfstütze 4 ist zwischen dem ersten Teilstück 11 und dem dritten Teilstück 13 eine nachfolgend im Einzelnen beschriebene und das zweite Teilstück 12 aufweisende Antriebseinrichtung angeordnet, welche die Verlagerung des ersten Teilstücks 11 in einer Bewegungsrichtung C auf den Kopf des Sitzinsassen hin bewirkt.

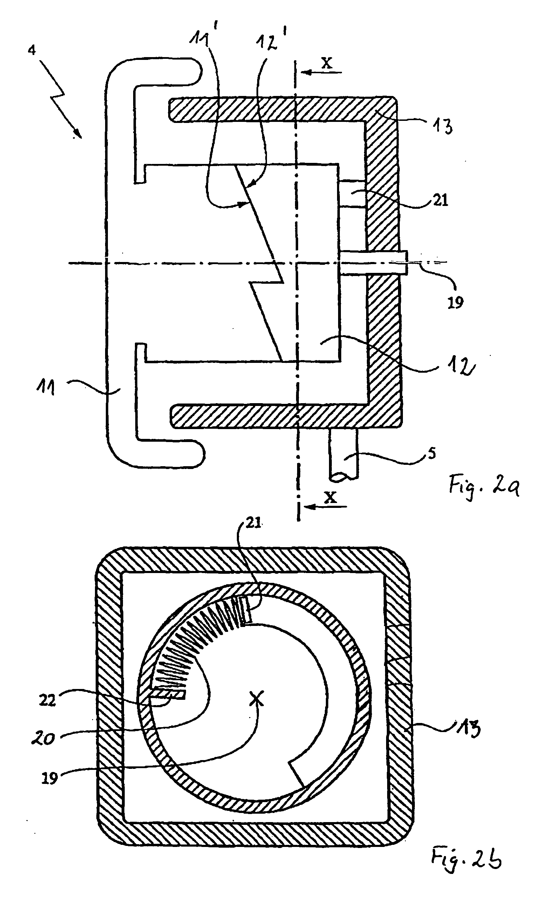

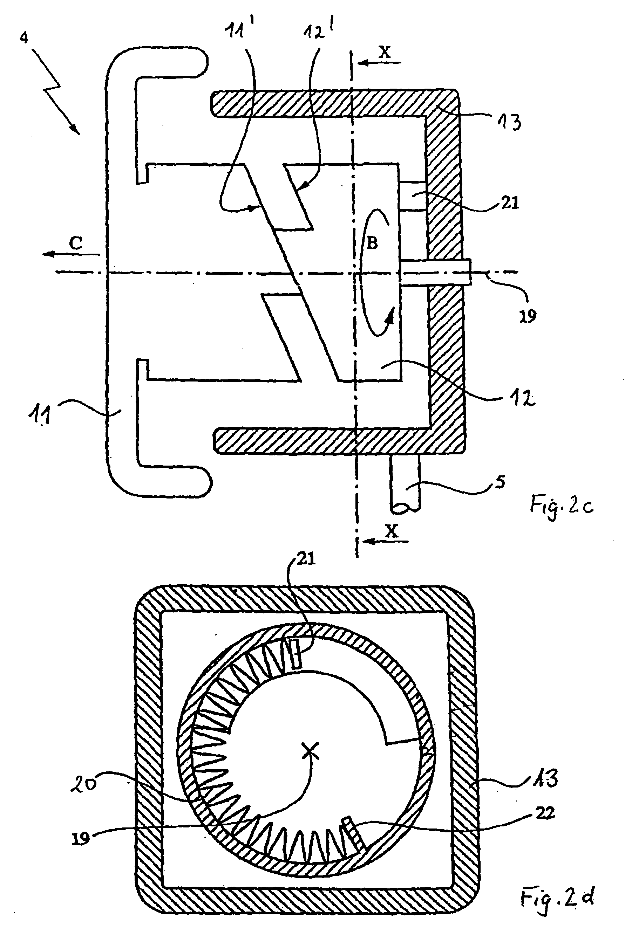

Gemäß den Figuren 2a bis 2d ist die Relativbewegung der Teilstücke 11, 12, 13 der erfindungsgemäßen Kopfstütze 4 in schematischer Weise näher dargestellt. Hierbei zeigen die Figuren 2a und 2b den Zustand der Kopfstütze in der Gebrauchsstellung und die Figuren 2c und 2d den Zustand der Kopfstütze in der Sicherheitsstellung (Verlagerung des ersten Teilstücks 11 in Richtung auf den Sitzinsassen zu, Bewegungsrichtung C), wobei die Figur 2b eine vordere Schnittdarstellung der in Figur 2a in einer seitlichen Schnittdarstellung abgebildeten Kopfstütze 4 gemäß der Schnittlinie X-X der Figur 2a darstellt und wobei die Figur 2d eine vordere Schnittdarstellung der in Figur 2c in einer seitlichen Schnittdarstellung abgebildeten Kopfstütze 4 gemäß der Schnittlinie X-X der Figur 2c darstellt. Die Antriebseinrichtung umfasst das zweite Teilstück 12 der Kopfstütze 4, das um eine Drehachse 19 drehbar mit dem dritten Teilstück 13 bzw. Grundkörper der Kopfstütze 4 verbunden ist. Eine im Bereich zwischen zwei Angriffspunkten 21 und 22 lediglich schematisch dargestellte vorgespannte Feder 20 ist -je nach Vorspannung - entweder in der Lage, nach Lösung einer nicht dargestellten Verriegelungseinrichtung eine Bewegung von der Gebrauchsstellung in die Sicherheitsstellung zu bewirken oder aber eine Bewegung von der Sicherheitsstellung in die Gebrauchsstellung zu bewirken. Bei einem Unfall (Fig. 2c, Fig. 2d) wird das zweite Teilstück 12 gegenüber dem dritten Teilstück 13 verdreht (Pfeil B). Aufeinander reibende Schrägflächen zwischen dem ersten Teilstück 11 und dem zweiten Teilstück 12 und/oder zwischen dem zweiten Teilstück 12 und dem dritten Teilstück 13 bewirken dabei eine axiale Kraft und eine Vorverlagerung des ersten Teilstücks in Richtung der Drehachse 19 in Richtung des Pfeiles C. Die mit 11' bzw. 12' bezeichneten und zueinander weisenden Stirnflächen des ersten Teilstücks 11 bzw. des zweiten Teilstücks 12 sind mit sägezahnartigen Schrägflächen ausgestattet und derart ausgebildet, dass eine Blockierung des ersten Teilstücks 11 in seiner ganz oder teilweise gemäß der Bewegungsrichtung C ausgefahrenen Lage erfolgt, wenn auf das erste Teilstück 11 eine dieses in die Gebrauchsstellung zurückbewegende Kraft wirkt. Ähnliche verzahnte Schrägflächen können entweder alternativ oder kumulativ zu ihrer Anordnung zwischen dem ersten Teilstück 11 und dem zweiten Teilstück 12 auch zwischen (in den Figuren 2a bis 2d nicht dargestellten) Schrägflächen zwischen dem zweiten Teilstück 12 und dem dritten Teilstück 13 vorgesehen sein.

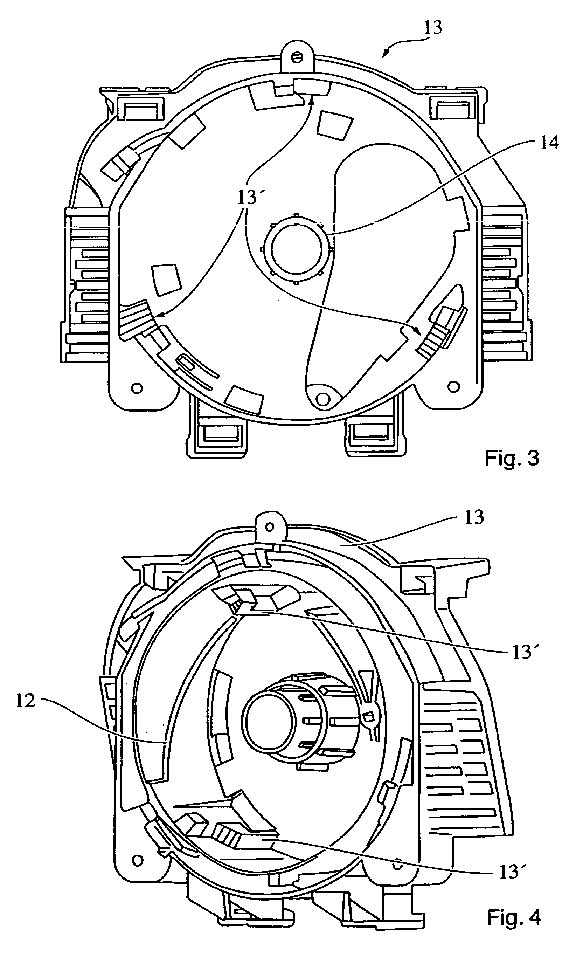

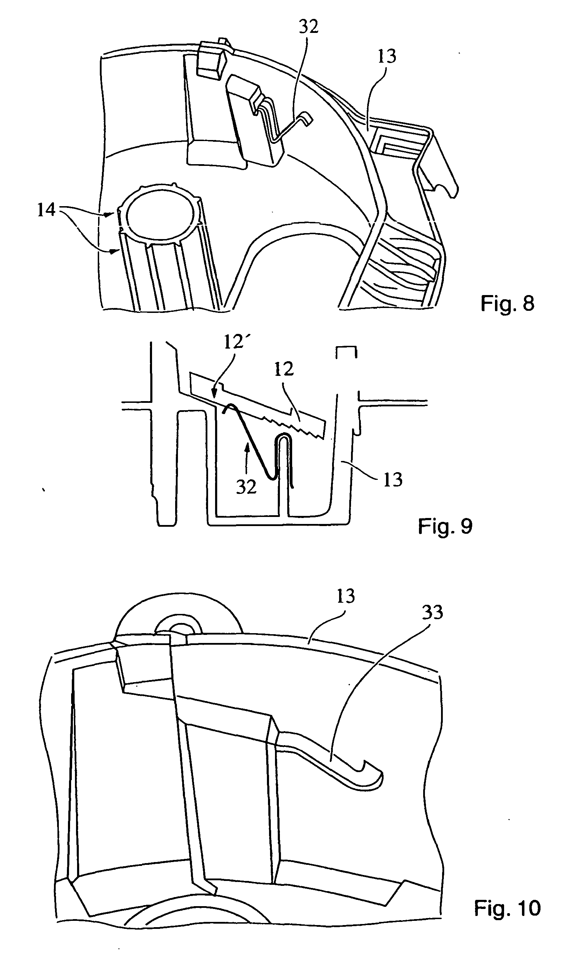

In den Figuren 3 und 4 ist in Draufsicht bzw. in einer perspektivischen Darstellung das dritte Teilstück 13 bzw. das zweite und dritte Teilstück 12, 13 gemäß einer erfindungsgemäßen Ausführungsform der Kopfstütze 4 dargestellt. Hierbei sind in Figur 3 die Schrägflächen 13' am dritten Teilstück 13 zu erkennen, die mit entsprechenden (nicht dargestellten) Schrägflächen des zweiten Teilstücks 12 zusammenwirken können. Ferner ist in Figur 3 die Lagerung des zweiten Teilstücks 12 auf an einem zentralen und als Lagerzapfen ausgebildeten Bereich des dritten Teilstücks angebrachten Lagerrippen 14. Die so ausgebildeten Lagestellen in Form von Lagerrippen 14 machen es möglich, dass die Lagerstelle des zweiten Teilstücks 12 in vergleichsweise gut reproduzierbarer Weise, nämlich insbesondere ohne das Vorhandensein von Entformungsgraten, ausgebildet wird. Die Lagerrippen 14 sind in besonders deutlicher Weise auch in Figur 8 dargestellt.

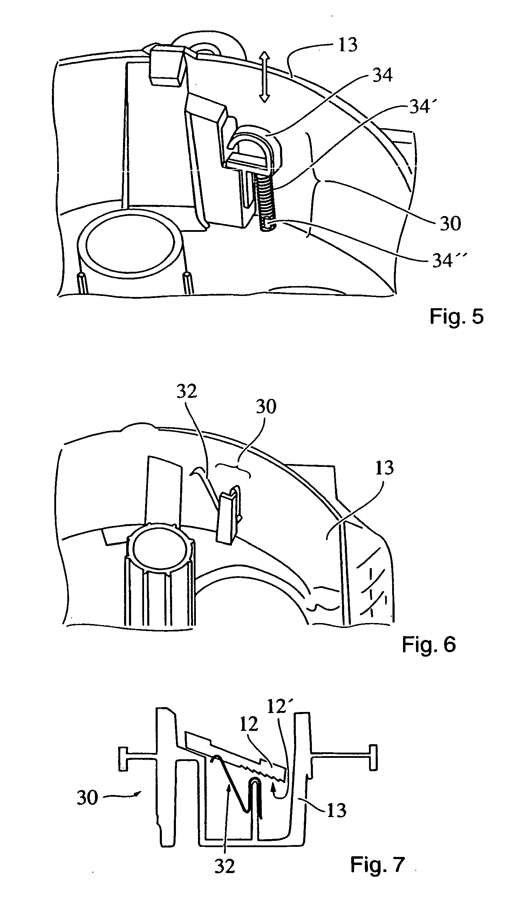

In den Figuren 5 bis 10 sind verschiedene Ausbildungen von eine Verzahnung und eine Distanzeinrichtung 30 aufweisenden Blockiereinrichtungen abgebildet. Hierbei dient die Distanzeinrichtung 30 dazu, dass das zweite und dritte Teilstück 12, 13 in solchen Situationen, in denen die Kraftwirkung aus der Richtung des Kopfes des Sitzinsassen ein gewisses Maß nicht überschreitet, nicht derart aneinander gedrückt werden, dass es zum Verzahnungseingriff an den Schrägflächen 12', 13' und damit zur Blockierung der Relativbewegung der Teilstücke 11, 12, 13 gegeneinander kommt. Hierzu weist die Distanzeinrichtung 30 gemäß der in Figur 5 abgebildeten Ausführungsform eine Federeinrichtung auf, die ein im Ganzen und im Wesentlichen parallel zur Verlagerungsrichtung C verschiebbares Abstandselement 34 aufweist. Das Abstandselement 34 ist mittels einer Feder 34' derart vorgespannt, dass die Verzahnung zwischen dem ersten Teilstück 11 und dem zweiten Teilstück 12 im Normalfall (d.h. ohne ausreichende Belastung von Seiten des Kopfes eines Sitzinsassen aus) nicht in Eingriff sind. Die Feder 34' ist zur besseren Fixierung mittels einer Befestigungsnase 34" arretiert. In Figur 6, 7, 8 und 9 sind verschiedene Ausführungsformen der Distanzeinrichtung 30 dargestellt, bei denen die Federeinrichtung mittels eines oder mehrerer am zweiten Teilstück und/oder am dritten Teilstück angespritzter oder aufgesetzter Metallfederelemente 32 realisiert ist. In der Figur 10 ist im Gegensatz dazu die Federeinrichtung einstückig am zweiten Teilstück 12 und/oder am dritten Teilstück 13 angeordnet. Das bedeutet, dass die Federeinrichtung als angeformtes Federelement 33 im Wesentlichen im gleichen Material des zweiten bzw. dritten Teilstücks 12, 13 gefertigt ist, jedenfalls jedoch im gleichen Herstellungsschritt, der insbesondere als ein Spritzgussvorgang ausgebildet ist.

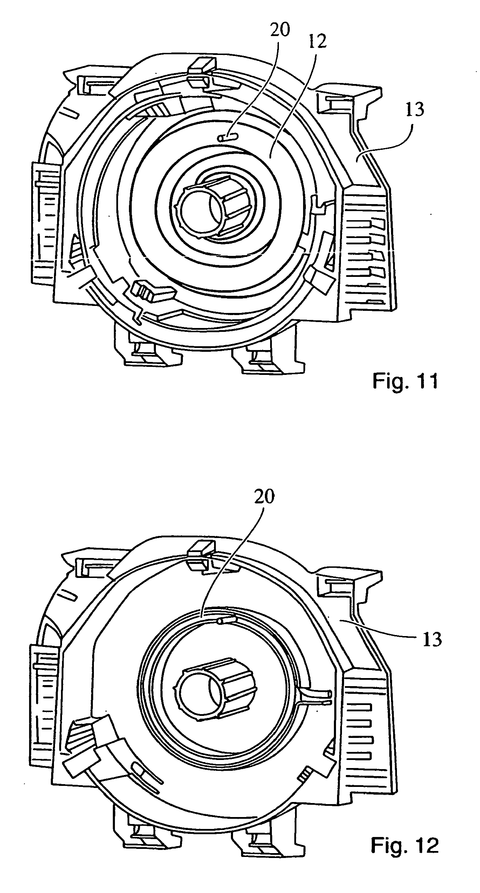

In Figur 11 und 12 sind weitere perspektivische Darstellungen des zweiten und dritten Teilstücks 12, 13 bzw. des dritten Teilstücks mit einer Schenkelfeder 20 als Antriebsmittel zur Herbeiführung der Relativbewegung zwischen dem zweiten und dritten Teilstück 12, 13.

### Bezugszeichenliste

- 1: Fahrzeugsitz
- 2: Sitzteil
- 3: Rückenlehne
- 4: Kopfstütze
- 5: Haltestange
- 11: erstes Teilstück der Kopfstütze
- 11': Stirnfläche / Schrägfläche des ersten Teilstücks
- 12: zweites Teilstück der Kopfstütze
- 12': Stirnfläche / Schrägfläche des zweiten Teilstücks
- 13: drittes Teilstück der Kopfstütze
- 13': Stirnfläche / Schrägfläche des dritten Teilstücks
- 14: Lagerrippen
- 19: Drehachse
- 20: Schenkelfeder
- 21, 22: Angriffspunkte
- 30: Distanzeinrichtung
- 32: Metallfederelemente Federeinrichtung
- 33: angeformtes Federelement Federeinrichtung
- 34: Abstandselement Federeinrichtung
- 34': Feder / Distanzfeder Federeinrichtung
- 34": Befestigungsnase Federeinrichtung
- Pfeil: B Drehrichtung des Hohlzylinders
- Pfeil: C Verschiebung des Polsterkörpers

## Patentansprüche

1. Kopfstütze (4) für einen Fahrzeugsitz (1), bei welcher zumindest ein dem Kopf des Sitzinsassen zugewandtes erstes Teilstück (11) der Kopfstütze unfallbedingt unter der Wirkung einer Relativbewegung eines im Wesentlichen zwischen dem ersten Teilstück (11) und einem dritten Teilstück (13) angeordneten zweiten Teilstücks (12) der Kopfstütze aus einer Gebrauchsstellung zum Kopf des Sitzinsassen hin entlang einer Verlagerungsrichtung (C) in eine Sicherheitsstellung verlagerbar ist, wobei die Relativbewegung der Teilstücke (11, 12, 13) eine Drehung um eine zur Verlagerungsrichtung (C) im Wesentlichen parallele Drehachse (19) ist, wobei eine Blockiereinrichtung zur Blockierung oder Verringerung einer Bewegung des ersten Teilstücks (11) der Kopfstütze entgegen der Verlagerungsrichtung (C) vorgesehen ist, **dadurch gekennzeichnet, dass** die Blockiereinrichtung eine Verzahnung wenigstens eines Teils der Teilstücke (11, 12, 13) und eine Distanzeinrichtung (30) aufweist.

2. Kopfstütze nach Anspruch 1, **dadurch gekennzeichnet, dass** das zweite Teilstück (12) relativ zum dritten Teilstück (13) im Bereich um die Drehachse (19) mittels am dritten Teilstück (13) angeordneter Lagerrippen (14) gelagert vorgesehen ist.

3. Kopfstütze nach einem der vorhergehenden Ansprüche, **dadurch gekennzeichnet, dass** die Distanzeinrichtung (30) wenigstens eine Federeinrichtung aufweist, wobei die Federeinrichtung einen Eingriff der Verzahnung verhindert, wenn das erste Teilstück (11) keine wesentliche Blockierbelastung erfährt.

4. Kopfstütze nach Anspruch 3, **dadurch gekennzeichnet, dass** die Federeinrichtung mittels am zweiten Teilstück (12) und/oder am dritten Teilstück (13) umspritzter oder aufgesetzter Metallfederelemente (32) realisiert ist.

5. Kopfstütze nach Anspruch 3, **dadurch gekennzeichnet, dass** die Federeinrichtung mittels am zweiten Teilstück (12) und/oder am dritten Teilstück (13) einstückig mit dem Material des zweiten und/oder dritten Teilstücks (12,13) vorgesehener Federelemente (33) realisiert ist.

6. Kopfstütze nach einem der vorhergehenden Ansprüche 3 bis 5, **dadurch gekennzeichnet, dass** die Federeinrichtung mittels eines im Ganzen parallel zur Verlagerungsrichtung (C) verschiebbaren sowie federvorbelasteten Abstandselement (34) realisiert ist.

7. Kopfstütze nach einem der vorhergehenden Ansprüche, **dadurch gekennzeichnet, dass** zwischen dem zweiten und dritten Teilstück (12,13) und/oder zwischen dem ersten und zweiten Teilstück (11, 12) eine Schenkelfeder (20) vorgesehen ist.

8. Kopfstütze nach Anspruch 7, **dadurch gekennzeichnet, dass** die Schenkelfeder (20) zur unfallbedingten Verlagerung des ersten Teilstücks (11) in die Sicherheitsstellung vorgespannt ist.

9. Kopfstütze nach Anspruch 7, **dadurch gekennzeichnet, dass** die Schenkelfeder (20) zur Einstellung der Gebrauchsstellung hin vorgespannt ist.

## Claims

1. Head rest (4) for a vehicle seat (1), wherein at least one first piece (11) of the head rest facing the head of the passenger can be moved, in event of an accident under the action of a relative movement of a second piece (12) of the head rest arranged essentially between the first piece (11) and a third piece (13), from a position of use toward the head of the passenger along a movement direction (C) into a safety position, wherein the relative movement of the pieces (11, 12, 13) is a rotation about an axis of rotation (19) essentially parallel to the direction of movement (C), wherein a locking mechanism is provided for locking or decreasing a movement of the first piece (11) of the head rest counter to the direction of movement (C), **characterized in that** the locking mechanism has a toothing of at least a portion of the pieces (11, 12, 13) and a spacing device (30).

2. Head rest according to claim 1, **characterized in that** the second piece (12) is mounted relative to the third piece (13) in the region around the axis of rotation (19) by means of bearing ribs (14) arranged on the third piece (13).

3. Head rest according to any one of the preceding claims, **characterized in that** the spacing device (30) has at least one spring device, wherein the spring device prevents an engagement of the toothing when the first piece (11) is not experiencing any significant locking load.

4. Head rest according to *claim 3,* **characterized in that** the spring device is realized by means of metal spring elements (32) molded onto or mounted on the second piece (12) and/or the third piece (13).

5. Head rest according to *claim 3,* **characterized in that** the spring device is realized by means of spring elements (33) provided on the second piece (12) and/or on the third piece (13) integrated with the material of the second and/or third piece (12, 13).

6. Head rest according to any one of the preceding claims 3 to 5, **characterized in that** the spring device is realized by means of a spring-loaded spacing element (34) which can move entirely parallel to the direction of movement (C).

7. Head rest according to any one of the preceding claims, **characterized in that** a torsion spring (20) is provided between the second and third piece (12,13) and/or between the first and second piece (11, 12).

8. Head rest according to *claim* 7, **characterized in that** the torsion spring (20) is biased to move the first piece (11) into the safety position during an accident.

9. Head rest according to *claim* 7, **characterized in that** the torsion spring (20) is biased to set the position of use.

## Revendications

1. Appui-tête (4) pour un siège de véhicule (1), pour lequel au moins une première pièce (11) de l'appui-tête faisant face à la tête de l'occupant du siège peut être déplacée en cas d'accident sous l'action d'un mouvement relatif d'une deuxième pièce (12) agencée sensiblement entre la première pièce (11) et une troisième pièce (13) d'une position d'utilisation en direction de la tête de l'occupant du siège le long d'un sens de déplacement (C) dans une position de sécurité, le mouvement relatif des pièces (11, 12, 13) étant une rotation autour d'un axe de rotation (19) sensiblement parallèle au sens de déplacement (C), un dispositif de blocage étant prévu pour le blocage ou la diminution d'un mouvement de la première pièce (11) de l'appui-tête dans le sens inverse du déplacement (C), **caractérisé en ce que** le dispositif de blocage présente une denture sur au moins d'une partie des pièces (11, 12, 13) et un dispositif d'espacement (30).

2. Appui-tête selon la revendication 1, **caractérisé en ce que** la deuxième pièce (12) est montée par rapport à la troisième partielle (13) dans la zone autour de l'axe de rotation (19) à l'aide de nervures d'appui (14) agencées sur la troisième pièce (13).

3. Appui-tête selon l'une quelconque des revendications précédentes, **caractérisé en ce que** le dispositif d'espacement (30) présente au moins un dispositif de ressort, le dispositif de ressort empêchant un engagement de la denture lorsque la première pièce (11) ne subit aucun blocage significatif.

4. Appui-tête selon la revendication 3, **caractérisé en ce que** le dispositif de ressort est réalisé à l'aide d'éléments de ressort en métal (32) montés ou moulés sur la deuxième pièce (12) et/ou sur la troisième pièce (13).

5. Appui-tête selon la revendication 3, **caractérisé en ce que** le dispositif de ressort est réalisé à l'aide des éléments de ressort (33) prévus sur la deuxième pièce (12) et/ou sur la troisième pièce (13) intégré avec le matériau de la deuxième et/ou troisième pièce (12, 13).

6. Appui-tête selon l'une quelconque des revendications 3 à 5, **caractérisé en ce que** le dispositif de ressort est réalisé à l'aide d'un élément de séparation à ressort (34) et mobile entièrement parallèlement au sens de déplacement (C).

7. Appui-tête selon l'une quelconque des revendications précédentes, **caractérisé en ce qu'**un ressort de torsion (20) est prévu entre la deuxième et la troisième pièce (12, 13) et/ou entre la première et la deuxième pièce (11, 12).

8. Appui-tête selon la revendication 7, **caractérisé en ce que** le ressort de torsion (20) est précontraint pour le déplacement de la première pièce (11) en cas d'accident dans la position de sécurité.

9. Appui-tête selon la revendication 7, **caractérisé en ce que** le ressort de torsion (20) est précontraint pour le déplacement vers la position d'utilisation.
